# FASCICULE DE BREVET EUROPEEN

(11) **EP 3 966 924 B1**
(45) Date de publication et mention de la délivrance du brevet: **07.06.2023**
(21) Numéro de dépôt: 20725421.0
(22) Date de dépôt: 22.04.2020
(51) Int. Cl.: H02N 2/16, H02N 2/04

(54) **MOTEUR PIÉZOÉLECTRIQUE À ONDE PROGRESSIVE DE FLEXION**
PIEZOELEKTRISCHER MOTOR MIT BIEGEWANDERWELLE
BENDING TRAVELLING WAVE PIEZOELECTRIC MOTOR

(30) Priorité: 06.05.2019 FR 1904738
(43) Date de publication de la demande: 16.03.2022
(73) Titulaire: Telemaq, 06130 Grasse (FR)
(72) Inventeur: SAUZADE, Jean-Denis, 06130 Grasse (FR); GOURLAY, Florian, 25720 Pugey (FR)
(74) Mandataire: Grosfillier, Philippe
(86) Numéro de dépôt international: PCT/EP2020/061187
(87) Numéro de publication internationale: WO 2020/224961

(56) Documents cités:
- EP-A1- 1 806 834
- FR-A1- 3 077 443

## Description

### Domaine de l'invention

La présente invention concerne un moteur piézoélectrique fonctionnant à la résonance d'un mode propre de sa structure. Elle concerne plus précisément un moteur piézoélectrique à onde progressive de flexion.

### Etat de la technique

Les moteurs piézoélectriques (nommés également « ultrasonores » ou « ultrasoniques ») sont rotatifs ou linéaires. Ils utilisent la vibration d'une structure pour générer des faibles déplacements d'un rotor ou un curseur. Sur ce principe, il existe des centaines d'architectures, permettant de générer des déplacements micrométriques. Le corps vibrant, nommé par analogie « stator vibrant », est mis en vibration par des éléments piézoélectriques ou électrostrictifs qui sont, en général des céramiques piézoélectriques polarisées. Plus particulièrement, l'usage de céramiques piézoélectriques de type PZT (Ziconate Titanate de Plomb) est privilégié pour des raisons de coût ou d'efficacité. D'autres matériaux piézoélectriques comme les plastiques piézoélectriques (PVDF), les quartz ou les monocristaux pourraient être utilisés. Malgré la grande diversité d'architecture des moteurs piézoélectriques ou ultrasonores, ceux-ci se caractérisent que par deux de conversion d'énergie, deux conversions d'énergie : une première conversion d'énergie électrique en énergie mécanique (conversion piézoélectrique) et une deuxième conversion tribologique (entrainement par friction). De manière schématique, les moteurs piézoélectriques peuvent se diviser en trois catégories : les moteurs fonctionnant à la résonance, les moteurs hors résonance (quasi-statique) et les moteurs à inertie (hors résonance). La présente invention concerne plus particulièrement les moteurs fonctionnant à la résonance d'un mode propre de la structure et plus spécifiquement les moteurs piézoélectrique à onde progressive de flexion.

Les moteurs piézoélectriques à onde progressive de flexion consistent à générer deux ondes de flexion dans un stator vibrant annulaire déphasées en quadrature dans le temps et l'espace. Ces ondes stationnaires déphasées dans le temps (π/2) et dans l'espace (un quart de longueur d'onde) se recombinent pour générer dans le stator vibrant annulaire une onde progressive de flexion dotée d'une célérité de propagation. Lorsque la propagation de flexion passe dans une section du stator vibrant annulaire, un mouvement elliptique est créé en surface du stator vibrant. Ce mouvement elliptique qui est de l'ordre de quelques micromètres, est transformé en mouvement rotatif ou linaire respectivement par un rotor ou un curseur pressé mécaniquement sur la surface du stator vibrant. Ce mécanisme est notamment décrit dans le brevet US 4 562 374. Des moteurs piézoélectriques selon le préambule de la revendication indépendante, comportant en outre une sorte d'un support élastique/déformable pour le stator annulaire, sont divulgués dans le document EP 1 806 834 A1.

Plusieurs dizaines d'années après leur invention, force est de constater que ces moteurs ont donné lieu à peu d'applications industrielles. Les applications les plus pertinentes étant celles relatives au contrôle de l'autofocus d'appareils photo (Canon). Ce type de moteur étant basé sur un principe physique très différent du moteur électromagnétique, il en résulte des propriétés très particulières. Les caractéristiques principales sont les suivantes : légèreté et faible encombrement (puissance massique élevée), fort couple à faible vitesse et sans réducteur (grande précision), couple de maintien sans alimentation (frein intégré), pas de perturbations électromagnétiques, silencieux et sans vibration, conception flexible qui peut s'intégrer au coeur même des mécanismes, grande précision due à l'absence de « pas » (haute résolution), temps de réponse mécanique très faible < 1ms, large gamme de températures opérationnelles.

Ces caractéristiques particulières peuvent être déterminantes pour des applications ou des petits moteurs sont exigés. Ce type de moteurs est limité en puissance par exemple de quelques dizaines de mW jusqu'à une vingtaine de watts. Cependant ces propriétés peuvent être recherchées pour des fonctions de verrouillage/déverrouillage, de réglage, de contrôle de flux lumineux, de contrôle de systèmes optomécaniques ou optroniques, de petits bras manipulateurs, de robotique légère (chirurgicale ou d'imagerie en particulier par résonance magnétique nucléaire), des électrovannes, des mini pompes ou des mécanismes de positionnement très précis (hexapode, table XY...). De manière générale, des applications qui nécessitent des actionneurs non-magnétiques ou compatibles du vide. Cependant, la plupart de ces applications nécessitent des résolutions et des précisions de positionnement de plus en plus exigeantes. Les résolutions et les précisions qui sont associées à ces applications sont de l'ordre du micromètre et même du nanomètre. Pour avoir une idée de ces exigences et des applications associées, on peut se référer au site de la société Physik Instruments : www.physikinstrumente.com. D'autres acteurs comme Nanomotion, Olympus , Seiko Instruments, Piezoconcept, Piezomotor, Cedrat Technologies ou encore Noliac sont actifs dans ce domaine. Les exigences en termes de résolution et de précision sont telles pour ces marchés que le moteur piézoélectrique à onde progressive perd de son intérêt car sa résolution intrinsèque est insuffisante. Les capacités de précision des moteurs à onde progressive sont basées sur un temps de réponse mécanique très court (de l'ordre de 1 ms) permettant d'atteindre des précisions linéaires au mieux de quelques dizaines de micromètres (10 à 50 µm). Cette précision s'obtient au prix d'un contrôle électronique assez complexe permettant d'anticiper la position du point de consigne. Pour les applications de hautes précisions, aucun des acteurs cités ci-dessus n'utilise la technologie des moteurs piézoélectriques à onde progressive. Pour obtenir des résolutions micrométriques et même nanométriques, les technologies utilisées sont basées sur des principes d'ondes stationnaires, de combinaison de déformations quasi-statiques ou des mouvements créés par inertie (stick-slip). Chacune de ces technologies a donné lieu à un grand nombre de brevets mais toutes ont un point commun lié à la capacité de réaliser des micro-pas (micro-steps). Les moteurs inertiels et à déformation quasi-statique (non résonants) sont basés sur le contrôle électronique à relativement basse fréquence et les moteurs résonant à onde stationnaire permettent de bien contrôler le point de friction à l'interface stator vibrant/ rotor (ou curseur). Ces principes de fonctionnement leur confèrent des propriétés beaucoup plus stables en contrôle comparées à celles des moteurs à onde progressive. Concernant les moteurs à ondes stationnaires, on peut citer les documents brevets de la société Physik Instruments tels que US2011/050035, WO2006/02703 A1 ou EP 2 209 203 A1. Un autre exemple concernant les moteurs à ondes stationnaire est le brevet EP1 186 063 A1. A relever également l'objet décrit dans le brevet US 6 664 710 qui utilise deux actionneurs piézoélectriques de type « stack » pour réaliser, hors résonance un mouvement rotatif continu sur un axe. Les deux actionneurs sont positionnés à 90° par rapport à l'axe et déphasés dans le temps de π/2 leur permettant de générer un mouvement circulaire à une pièce déformable. Cette architecture est une variante des moteurs linéaires à combinaison de déformations quasi-statiques (hors résonance). L'inconvénient de cette structure est sa grande complexité et son coût (synchronisation des stacks). Par ailleurs, la société Cedrat Technologies a imaginé la possibilité d'utiliser un mode d'amplification connu des déplacements microniques dénommé «flextenseurs» pour réaliser des déplacements elliptiques en surface de l'élément en flexion. Le principe étant de piloter un « stack» en traction et l'autre en compression déphasés dans le temps de π/2. Cette architecture est décrite dans la demande de brevet FR2740276 A1.

Concernant les moteurs à inertie (stick-slip), les documents brevets de Physik Instruments US2015/076965 ou US2010/34970 permettent de comprendre les principes et les avantages pour le micro-positionnement. Par ailleurs, il est connu que l'utilisation d'actionneurs piézoélectriques de type «stack» ou bilame permet d'obtenir, avec certaines précautions de contrôle (pour compenser l'hystérésis ou la non-linéarité des déformations) des déplacements avec des résolutions allant du nanomètre au micromètre. Ce mode de contrôle a fait l'objet de nombreux travaux scientifiques et leur utilisation est commune aux acteurs dans le domaine du micro-positionnement. A cet effet, on peut citer les articles scientifiques suivants :
" Modelling piezoelectric stack actuator for control of micromanipulator", M. Goldfarb, N. Celanovik, International Conférence on Robotics and Automation, Minneapolis (April 1996).
"Piezoelectric actuators in micropositioning", M. Pozzi, T. King, Engineering Science and Educational Journal, Vol. 10, Issue 1, Feb. 2001.

Il est à noter cependant que les technologies d'actionneurs ou de moteurs permettant des résolutions et/ou des précisions nanométriques ou micrométriques qui ont été décrites ci-dessus, comportent des inconvénients majeurs dont certains sont brièvement décrits ci-après :
- Les déformations et donc les déplacements générés par ces structures sont faibles (inférieures au micromètre) et exigent donc des tolérances mécaniques très faibles et des qualités d'usinage et de surface très élevées. Cela se traduit par des coûts très élevés et des pièces techniques très sophistiquées.
- Mis à part, pour le moteur à inertie (stick-slip), les déplacements sont faibles et les vitesses de rotations (pour les actionneurs rotatifs) sont également très faibles. Pour y remédier, des structures d'amplification complexes ont été mises en oeuvre mais en contrepartie de coûts élevés.
- Le contrôle électronique de ce type d'actionneurs est coûteux et encombrant car il est nécessaire de générer des signaux permettant de contrôler à chaque instant les micro-«pas» (micro-steps) des actionneurs.

### Description générale de l'invention

Pour pallier à la fois les inconvénients des technologies de micro-positionnement décrites ainsi que les insuffisances en précision des moteurs piézoélectriques à onde progressive, la présente invention décrit une structure particulière d'un moteur à onde progressive permettant de combiner avantageusement l'intérêt des moteurs piézoélectriques à onde progressive et la résolution micrométrique des actionneurs piézoélectriques. En effet, les moteurs à onde progressive comportent une structure mécanique simple n'exigeant pas d'empilement de céramiques piézoélectriques complexes ni de tolérances mécaniques élevées. Ce sont des structures qui fonctionnent à la résonance qui génèrent des déplacements de plusieurs micromètres (entre 5 et 10 µm). Le point de fonctionnement étant à une fréquence fixe, l'électronique d'alimentation et de contrôle est assez simple et permet la miniaturisation. Cela se traduit par des coûts de fabrication beaucoup plus faibles que pour les actionneurs dédiés au micro-positionnement. Par ailleurs, le rendement de ces moteurs est très élevé (comparativement aux actionneurs de micro-positionnement) ce qui permet un fonctionnement en continu (les actionneurs de micro-positionnement sont réservés à des applications d'ajustement). D'autre part, les moteurs à onde progressive possèdent des caractéristiques proches des moteurscouple électromagnétiques en pilotage direct (direct drive) sans réducteur. Les caractéristiques couple-vitesse de ces moteurs permettent des rotations continues ou des déplacements importants (long range) à relativement grande vitesse.

La présente invention a pour objet de décrire un moteur piézoélectrique à onde progressive à relativement faible coût, compact, possédant les propriétés de couple-vitesse pour des fonctionnements continus ainsi qu'un fort couple d'arrêt hors alimentation et permettant des résolutions et des précisions nanométriques.

Plus précisément, la présente invention concerne un moteur piézoélectrique à onde progressive de flexion comprenant un support disposé dans une base, un élément piézoélectrique, un stator vibrant, un rotor, un axe rotatif et un voile de découplage assurant la fixation du stator vibrant sur le support. Le moteur selon l'invention se caractérise par le fait que le support est mécaniquement relié à la base par le biais d'au moins un élément déformable et d'au moins un actionneur piézoélectrique, de telle manière que le support puisse se déformer angulairement par rapport à la base , pour entrainer en rotation l'axe lorsque le stator vibrant n'est plus alimenté électriquement.

La présente invention peut être utilisée dans les applications de micro-positionnement dans le domaine des dispositifs optiques (par exemple microscopie), des platines de positionnement micrométrique, des hexapodes, des dispositifs de distribution de liquide très précis entre autre dans le domaine médical, mais aussi dans les applications de robotique avec retour d'effort, de manipulateurs avec une interface haptique, de robots humanoïdes avec des articulations instrumentées, de motorisations ultra-précises non-magnétiques pour les applications IRM (Imagerie par Résonance Magnétique), de robots chirurgicaux, de motorisations compatibles du «vide»... Cette liste n'est pas exhaustive et toute application exigeant des actionneurs de micro-positionnement peut être concernée par la présente invention.

De préférence, le ou les actionneurs piézoélectriques sont de types «stack» ou bilame et coopèrent avec le support. Pour des raisons de rigidité en rotation et de résolutions, les actionneurs de type « stack » sont privilégiés. D'autres types d'actionneurs de haute résolution comme ceux utilisant la magnétostriction, l'électrostriction ou la déformation capacitive peuvent être utilisés dans le cadre de cette invention.

Le moteur piézoélectrique selon l'invention est composé de quatre parties principales : le support, l'élément piézoélectrique, le stator vibrant et le rotor. L'élément piézoélectrique, préférentiellement une céramique piézoélectrique annulaire de type PZT (Titanate Zirconate de Plomb) est couplé mécaniquement et acoustiquement au stator vibrant. Ce couplage s'effectue préférentiellement par collage. L'élément piézoélectrique annulaire est polarisé et alimenté de telle manière qu'une onde progressive de flexion est générée dans le stator vibrant. Les fréquences d'excitation de ce type de moteur piézoélectrique à onde progressive dépendent de la géométrie et des matériaux du stator vibrant. En général, on définit une gamme de fréquences au-dessus de la bande audio de l'homme soit, par exemple entre 20 kHz et 50 kHz. La flexion du stator vibrant se traduit par un mouvement elliptique en surface du stator vibrant. Le rotor est pressé sur la surface du stator afin d'être entrainé par ce mouvement elliptique. Une force axiale est appliquée sur le rotor afin que la force de friction, gouvernée par la loi de Coulomb entraîne le rotor. Le principe de ce type de moteur à onde progressive est décrit précisément par le brevet US 4 562 374 A (1985). L'entraînement par friction du rotor (ou curseur) sur le stator est une caractéristique fondamentale des moteurs piézoélectriques. Il en résulte que les moteurs piézoélectriques à onde progressive présentent un couple d'arrêt lorsque le moteur n'est pas alimenté électriquement. Ce couple d'arrêt, caractéristique des moteurs piézoélectriques, permet de solidariser le support, le stator vibrant, le rotor et l'axe du moteur. Il en résulte que lorsque le moteur n'est plus alimenté, il suffit de déformer de manière appropriée le support pour mettre en mouvement l'axe du moteur. La position du ou des actionneurs piézoélectriques, la géométrie ainsi que la rigidité du support sont telles que le support subit une légère rotation coaxiale avec celle de l'axe du rotor. Cette déformation est réalisée, par exemple de manière progressive en fonction de la tension d'alimentation appliquée à l'actionneur piézoélectrique. De manière avantageuse, la déformation en rotation du support est proportionnelle à la tension d'alimentation appliquée à l'actionneur piézoélectrique. Suivant l'invention, le support présente des zones de déformations privilégiées, qui en coopérant avec l'actionneur (ou les actionneurs) piézoélectriques permettent à la fois un mouvement de rotation du support tout en conservant une rigidité mécanique importante. Un seul actionneur piézoélectrique permettant la déformation du support suffit à la présente invention. En effet, lorsque le moteur à onde progressive de flexion est à l'arrêt et non alimenté, l'axe du moteur reste en position tant que le couple de maintien n'est pas dépassé. Lorsqu'on applique une tension électrique à l'actionneur piézoélectrique, celui-ci va déformer le support du moteur et mettre en mouvement l'axe. Ces déplacements en rotation sont faibles et la résolution nanométrique de l'actionneur piézoélectrique permet d'accéder à des résolutions angulaires inférieures au micro radians. Cette résolution est théorique et va dépendre de paramètres technologiques liés aux rigidités et à l'élasticité des zones de déformation. De plus, des phénomènes non linéaires, en particulier l'hystérésis dans le cycle de déformation de l'actionneur vient altérer cette résolution. Par ailleurs, un seul actionneur nécessite une utilisation en compression et en traction. Il est connu que les actionneurs piézoélectriques de type « stack » ont une plus grande capacité d'effort en compression qu'en traction. Il est donc plus avantageux d'utiliser deux actionneurs piézoélectriques en compression pour exercer une déformation en rotation au support du moteur à onde progressive. Pour comprendre tout l'intérêt de la présente invention, nous pouvons simuler un contrôle en position d'un moteur à onde progressive de flexion réalisé suivant l'invention. L'utilisateur qui souhaite un contrôle en position du moteur piézoélectrique à onde progressive seul obtiendra une position de l'ordre du mrad (milli radian). Dans ce cas, l'utilisateur bénéficiera des avantages des moteurs piézoélectriques à onde progressive comme la vitesse de rotation élevée et les forts couples. Lorsque le moteur à onde progressive est à l'arrêt en position, une autre partie de l'électronique de pilotage prend le contrôle du moteur en activant le ou les actionneurs piézoélectriques qui opèrent dans une plage d'une dizaine de mrad avec une résolution de l'ordre du µrad (micro radian). Il est évident que ce contrôle en position nécessite un capteur de position capable de mesurer le micro radian. Pour l'utilisateur, le bénéfice de l'invention résulte dans une augmentation d'un facteur 10 de la résolution en position d'un moteur piézoélectrique à onde progressive de flexion.

### Description détaillée de l'invention

L'invention sera mieux comprise sera mieux comprise dans le présent chapitre, au moyen d'exemples illustrés. Seuls les éléments nécessaires à la compréhension de l'invention ont été représentés. Pour faciliter la lecture des dessins, les mêmes éléments portent les mêmes références d'une figure à l'autre.

### Brève description des figures

- Figure 1 :: Exemple de moteur piézoélectrique de l'état de la technique réduit aux trois éléments principaux du moteur (vue éclatée).
- Figure 2 :: Moteur piézoélectrique de l'état de la technique inséré dans un support (vue éclatée).
- Figure 3 :: Première variante d'une structure de base d'un moteur selon l'invention (vue de dessus).
- Figure 4 :: Vue isométrique de la structure de la figure 3.
- Figure 5 :: Deuxième variante d'une structure de base d'un moteur selon l'invention (vue de dessus).
- Figure 6 :: Vue isométrique de la structure de la figure 5.
- Figure 7 :: Troisième variante d'une structure de base d'un moteur selon l'invention (vue de dessus).
- Figure 8 :: Vue isométrique de la structure de la figure 7.
- Figure 9 :: Exemple de réalisation d'un moteur selon l'invention.

### Références numériques utilisées dans les figures

- 1.: Stator vibrant
- 2.: Élément piézoélectrique
- 3.: Rotor
- 4.: Axe rotatif
- 5.: Voile de découplage
- 6.: Circuit imprimé
- 7.: Support
- 8.: Capteur de couple
- 9.: Base
- 10.: Élément déformable
- 11.: Actionneur piézoélectrique
- 12.: Agencement d'amplification mécanique
- 13.: Fil de connexion
- 14.: Capot

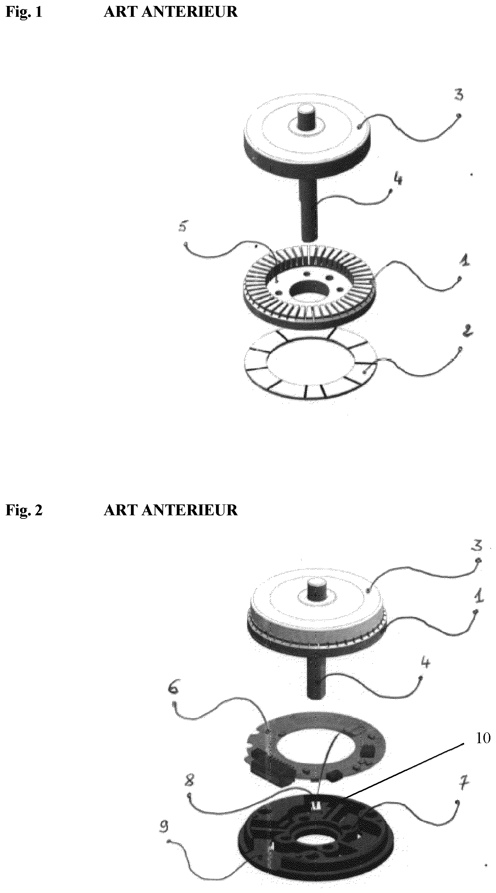

Le moteur piézoélectrique de l'état de la technique illustré sur la figure 1 est similaire à celui qui est divulgué dans le brevet US 4 562 374.

L'élément piézoélectrique **2** est fixé au stator vibrant **1.** Le rotor **3** est pressé mécaniquement sur le stator vibrant **1** par une force axiale (non représentée). Le stator vibrant **1** comporte une zone de fixation, dénommée « voile de découplage » **5**, qui est suffisamment rigide en rotation mais suffisamment flexible axialement pour ne pas perturber le mode de flexion généré dans le stator vibrant 1. La dénomination « voile de découplage » illustre bien la fonction de cet élément qui permet de fixer « statiquement » le stator vibrant **1** mais qui ne perturbe pas son comportement dynamique à la résonance. L'axe rotatif **4** est lié mécaniquement au rotor **3** de telle manière que lors de la rotation de ce dernier, l'axe **4** est mis en mouvement sans aucun jeu mécanique. Dans certaines configurations, l'axe **4** peut être un axe creux pour faire passer des fils ou des faisceaux lumineux par exemple. L'élément piézoélectrique **2** est généralement annulaire mais peut, dans d'autres modes de réalisation, être constitué de plusieurs céramiques piézoélectriques disposées de manière adéquate.

Le moteur piézoélectrique de l'état de la technique illustré sur la figure 2 est fixé sur un support **7** disposé dans une base de boîtier **9.** Le support **7** est fixé au boîtier **9** par l'intermédiaire d'éléments déformables **10**, dont un au moins est doté d'un capteur de couple **8.**

Le moteur comprend également un circuit imprimé **6** dont la fonction est d'alimenter électriquement le moteur et de traiter les signaux des différents capteurs intégrés dans le boîtier (non-illustré).

Il convient de relever que lors de l'arrêt du moteur (hors alimentation), les éléments principaux du moteur **1-4** sont complètement solidaires car liés en rotation par la force axiale et la force de friction résultante. Pour que le rotor **3** et son axe **4** aient un mouvement relatif par rapport au stator vibrant **1**, il est nécessaire de vaincre le couple de maintien (supérieur au couple maximal du moteur).

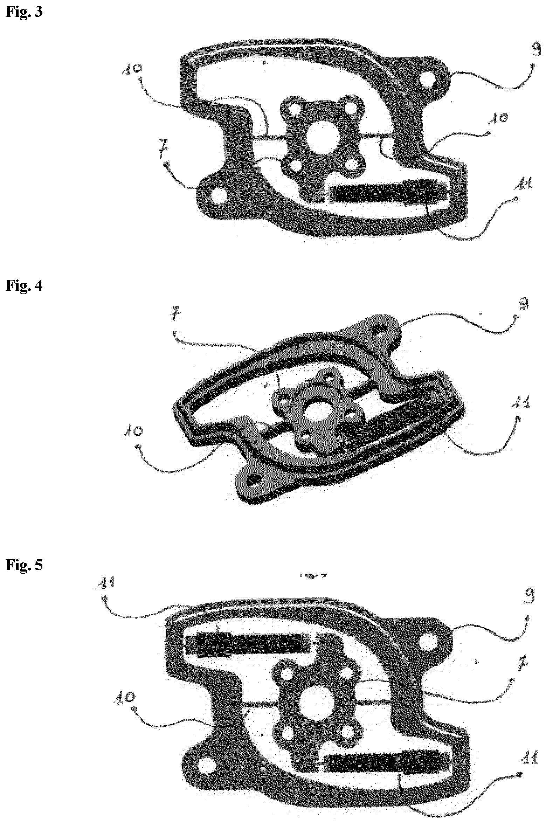

La première variante de structure de base du moteur selon l'invention (voir figure 3) comprend un actionneur piézoélectrique **11**, un support 7, deux éléments déformables **10**, l'ensemble étant disposé à l'intérieur de la base **9** d'un boîtier (non illustré).

Le moteur piézoélectrique selon l'invention, dans sa variante de la figure 3, comprend un actionneur piézoélectrique **11** de type « stack ». La structure de base du moteur comprend deux éléments déformables **10**, disposés de telle manière que la force longitudinale exercée par l'actionneur piézoélectrique **11** se traduise par un déplacement angulaire du support **7.** Le déplacement angulaire du support **7** a pour effet de mettre en mouvement de rotation l'ensemble constitué du stator vibrant **1**, du rotor **3** et de l'axe **4.** Plus précisément, le stator vibrant **1** est fixé mécaniquement au support **7** par le biais du voile de découplage **5.** Quand le moteur est à l'arrêt, la force de friction entre le rotor **3** et le stator vibrant **1** rend solidaires en rotation l'axe **4** et le support **7.**

La figure 4 met en évidence les liens mécaniques entre les composants **7**, **9**, **10**, **11** qui forment la structure de base du moteur.

La structure illustrée sur la figure 5 deux actionneurs piézoélectriques **11** disposés symétriquement de de chaque côté du support 7.

Lorsque l'un des actionneurs piézoélectriques **11** se déforme en traction, l'autre actionneur piézoélectrique **11** se déforme en compression. L'effort de déformation du support 7 est assuré par l'actionneur piézoélectrique **11** qui travaille en compression. La structure de la figure 5 montre un exemple d'élément déformable **10.** Bien évidemment, toute autre géométrie d'élément déformable permettant d'obtenir un effet similaire peut être utilisée, à savoir d'assurer une déformation en rotation du support 7 tout en conservant une grande rigidité mécanique en rotation. En particulier et sans être exhaustif, les actionneurs piézoélectriques **11** peuvent être positionnés en parfaite symétrie par rapport au plan dans lequel se situe les éléments déformables **10** afin que le couple du moteur (suivant le sens de rotation) exerce toujours une force en compression dans l'un ou l'autre des actionneurs piézoélectriques **11.**

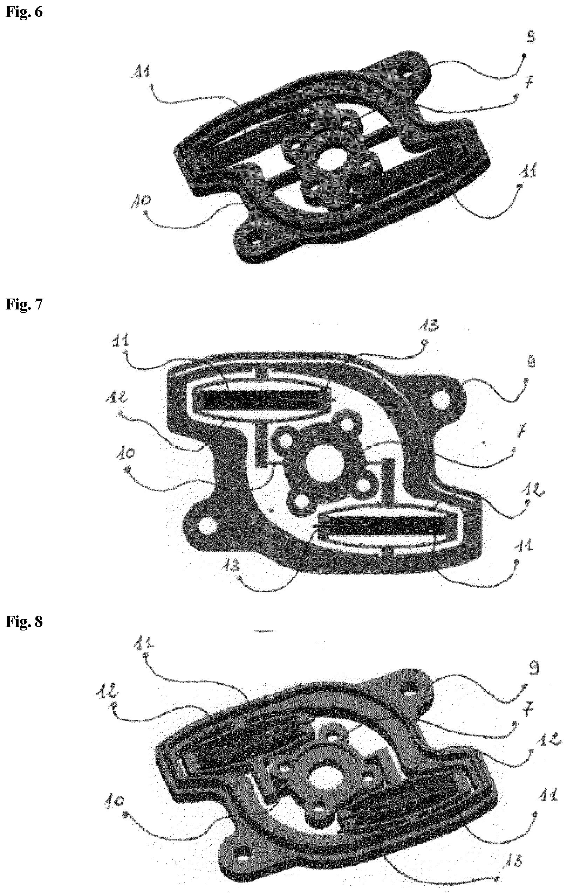

La figure 6 met en évidence les liens mécaniques entre les composants **7**, **9**, **10**, **11** qui forment la structure de base du moteur.

Dans la variante de structure de la figure 7, les actionneurs sont disposés et fixés à l'intérieur d'agencements d'amplification mécanique **12**, communément nommés « flextenseurs », qui ont pour effet d'augmenter l'angle de rotation du support **7.** Ce mécanisme d'amplification est connu mais la présente invention inclut également tout autre type de mécanisme d'amplification mécanique, plus particulièrement ceux utilisant les points « pivots » et les déformations élastiques.

La figure 8 met en évidence les liens mécaniques entre les composants **7**, **9**, **10**, **11**,**12** qui forment la structure de base du moteur.

La variante de la figure 8 met en évidence des électrodes et les fils de connexion **13** permettant d'alimenter électriquement les actionneurs piézoélectriques **11.** Dans les applications de positionnement nanométrique ou micrométrique, il est nécessaire de pouvoir contrôler par des capteurs ces déplacements. Plusieurs techniques sont connues par l'homme de l'art, en particulier les jauges d'extensométrie positionnées soit directement sur le « stack » (et mesurant l'élongation de l'actionneur) soit en combinaison avec un élément de déformation tel que défini, par exemple par les éléments déformables (et mesurant la déformation de ces éléments). Il est à noter que ces mêmes capteurs de déformation permettant de contrôler les déplacements angulaires de haute résolution dus aux actionneurs piézoélectriques, peuvent être utilisés pour mesurer le couple résistant du moteur. En utilisant soit l'électronique de contrôle du moteur piézoélectrique à onde progressive, soit l'électronique de contrôle des actionneurs piézoélectriques, le champ d'application des capteurs peut être dissocié tout en exploitant les mêmes valeurs de sortie. D'autres types de capteurs pouvant mesurer des déformations ou des déplacements très faibles, peuvent être mis en oeuvre suivant l'état de l'art de la technique et en accord avec les connaissances de l'homme de l'art. Des capteurs capacitifs, piezorésistifs, optiques ou à effet Hall peuvent notamment être utilisés.

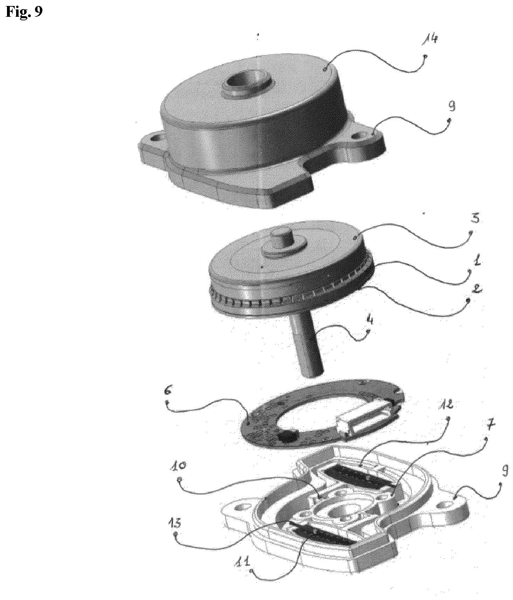

Enfin, la figure 9 présente un moteur piézoélectrique selon l'invention, associé à la structure illustrée sur les figures 7 et 8.

La base **9** du boîtier ainsi que le capot **14** permettent d'exercer la force axiale nécessaire pour presser le rotor **3** sur le stator vibrant **1.** Cette force axiale est relayée par un roulement à bille (non représenté). Le mouvement angulaire induit par les actionneurs piézoélectriques **11** entraîne l'ensemble de la structure de base du moteur ainsi que l'axe **4.** De préférence, le moteur selon l'invention comprend une carte électronique d'alimentation et de contrôle à deux étages (non représentée). Le premier étage est constitué des éléments électroniques permettant de générer les signaux électriques d'alimentation du moteur à onde progressive, en particulier deux ondes électriques comprises entre 20 et 60 kHz, déphasées de π/2 et d'un voltage entre 20 et 200 V, suivant les caractéristiques des moteurs. Lorsque le moteur est à l'arrêt, le deuxième étage dispose de composants électroniques dont le rôle est d'alimenter en courant continu (ou à basse fréquence) les actionneurs piézoélectriques de manière adéquate.

Comme indiqué précédemment, le moteur selon la présente invention nécessite l'utilisation d'au moins un actionneur piézoélectrique **11** fonctionnant soit en compression soit en traction (condition suffisante). Un actionneur de type bilame fonctionnant en flexion peut être mis en oeuvre. Ce type d'actionneur se caractérise par des déplacements plus importants, ce qui facilite l'intégration mécanique mais les efforts sont beaucoup plus faibles. Dans les applications en positionnement micrométrique, il est important de conserver une rigidité en rotation importante. C'est pourquoi, les actionneurs de type « stack » seront privilégiés dans ce domaine d'utilisation. Beaucoup plus rigides, ils sont capables de générer des efforts importants mais en contrepartie de déplacements faibles de l'ordre de 50 à 100 µm de course. L'actionneur piézoélectrique de type « stack» **11** a l'avantage de conserver au support 7 une grande rigidité en rotation. Un tel actionneur peut être piloté par des tensions continues (positives ou négatives) de quelques volts ce qui rend l'électronique d'alimentation beaucoup plus simple. Cependant, ce type d'actionneur est sensible à la contrainte à la traction conduisant à des ruptures ou des endommagements du « stack ». Pour pallier cet effet, il convient de pré-contraindre mécaniquement le « stack » ou de le faire fonctionner uniquement en compression. Pour cette raison et pour d'autres raisons liées à la symétrie du mode d'actionnement des actionneurs vis-à-vis de l'axe de rotation, il est avantageux de disposer de deux actionneurs piézoélectriques **11** pour déformer en rotation le support **7.**

Si l'on veut augmenter la course angulaire lors du déplacement du support **7**, il suffit d'amplifier le déplacement du ou des actionneurs piézoélectriques **11.**

Le moteur piézoélectrique selon l'invention peut être avantageusement utilisé pour des opérations de micro positionnement très diverses, en relation avec p.ex. des composants optroniques, des manipulateurs avec retour d'effort (interface Haptique), des bras robotiques pour toute application industrielle ou médicale, de l'outillage de procédés de haute précision (semi-conducteur), des hexapodes, le contrôle actif de vibration, les mini pompes de fluide, les électrovannes, les actionneurs compatibles des applications sous vide, sous fort champ magnétique ou pour le contrôle de chemins optiques.

Il va de soi que l'invention ne se limite pas aux exemples illustrés.

## Revendications

1. Moteur piézoélectrique à onde progressive de flexion comprenant un support (7) disposé dans une base (9), un élément piézoélectrique (2), un stator vibrant (1), un rotor (3), un axe rotatif (4) et un voile de découplage (5) assurant la fixation du stator vibrant (1) sur le support (7) ; **caractérisé en ce que** le support (7) est mécaniquement relié à la base (9) par le biais d'au moins un élément déformable (10) et d'au moins un actionneur piézoélectrique (11), de telle manière que le support (7) puisse se déformer angulairement par rapport à la base (9), pour entraîner en rotation l'axe (4) lorsque le stator vibrant (1) n'est plus alimenté électriquement.

2. Moteur piézoélectrique selon la revendication 1 comprenant deux actionneurs piézoélectriques (11) dont l'un fonctionne en flexion et l'autre en compression.

3. Moteur piézoélectrique selon la revendication 1 ou 2 **caractérisé en ce que** le ou les actionneurs piézoélectriques (11) sont de type « stack ».

4. Moteur piézoélectrique selon l'une quelconque des revendications précédentes comprenant un agencement d'amplification mécanique (12) disposé de manière à augmenter les déplacements angulaires du support (7).

5. Moteur piézoélectrique selon l'une quelconque des revendications précédentes dans lequel au moins un actionneur piézoélectrique (11) est doté d'au moins un capteur de déplacement.

6. Moteur piézoélectrique suivant la revendication 4 dans lequel au moins un agencement d'amplification mécanique piézoélectrique (12) est doté d'au moins un capteur de déplacement.

7. Moteur piézoélectrique selon la revendication 5 ou 6 dans lequel au moins un capteur de déplacement est utilisé comme capteur de couple (8) résistant lors du fonctionnement du moteur.

8. Moteur piézoélectrique selon l'une quelconque des revendications précédentes **caractérisé en ce que** l'axe (4) est creux.

9. Moteur piézoélectrique selon l'une quelconque des revendications précédentes **caractérisé en ce qu'**il comprend une carte électronique d'alimentation et de contrôle à deux étages : un premier étage dédié au moteur et un deuxième étage dédié aux actionneurs piézoélectriques (11).

## Patentansprüche

1. Piezoelektrischer Motor mit Biegewanderwelle umfassend einen Träger (7), der in einer Basis (9) angeordnet ist, ein piezoelektrisches Element (2), einen vibrierenden Stator (1), einen Rotor (3), eine Drehachse (4) und einen Entkopplungsschleier (5), der die Befestigung des vibrierenden Stators (1) auf dem Träger (7) gewährleistet; **dadurch gekennzeichnet, dass** der Träger (7) über wenigstens ein verformbares Element (10) und wenigstens einen piezoelektrischen Aktor (11) so mit der Basis (9) verbunden ist, dass sich der Träger (7) winkelmäßig in Bezug auf die Basis (9) verformen kann, um die Achse (4) in Drehung zu versetzen, wenn der vibrierende Stator (1) nicht mehr elektrisch versorgt wird.

2. Piezoelektrischer Motor nach Anspruch 1 umfassend zwei piezoelektrische Aktoren (11), von denen der eine bei Biegung und der andere bei Druck arbeitet.

3. Piezoelektrischer Motor nach Anspruch 1 oder 2, **dadurch gekennzeichnet, dass** der oder die piezoelektrischen Aktoren (11) vom Typ "Stack" sind.

4. Piezoelektrischer Motor nach einem der vorhergehenden Ansprüche, umfassend eine mechanische Verstärkungsanordnung (12), die so angeordnet ist, dass sie die Winkelverschiebungen des Trägers (7) vergrößert.

5. Piezoelektrischer Motor nach einem der vorhergehenden Ansprüche, wobei wenigstens ein piezoelektrischer Aktor (11) mit wenigstens einem Wegsensor versehen ist.

6. Piezoelektrischer Motor nach Anspruch 4, wobei wenigstens eine piezoelektrische mechanische Verstärkungsanordnung (12) mit wenigstens einem Wegsensor versehen ist.

7. Piezoelektrischer Motor nach Anspruch 5 oder 6, wobei wenigstens ein Wegsensor als Sensor für das Widerstandsdrehmoment (8) beim Betrieb des Motors verwendet wird.

8. Piezoelektrischer Motor nach einem der vorhergehenden Ansprüche, **dadurch gekennzeichnet, dass** die Achse (4) hohl ist.

9. Piezoelektrischer Motor nach einem der vorhergehenden Ansprüche, **dadurch gekennzeichnet, dass** er eine elektronische Versorgungs- und Steuerplatine mit zwei Stufen umfasst: einer ersten Stufe, die für den Motor dediziert ist, und einer zweiten Stufe, die für die piezoelektrischen Aktoren (11) dediziert ist.

## Claims

1. Piezoelectric motor with bending traveling wave comprising a support (7) positioned in a base (9), a piezoelectric element (2), a vibrating stator (1), a rotor (3), a rotary shaft (4) and a decoupling web (5) for securing the vibrating stator (1) to the support (7); **characterized in that** the support (7) is mechanically linked to the base (9) by means of at least one deformable element (10) and at least one piezoelectric actuator (11), such that the support (7) can be deformed angularly with respect to the base (9), to drive the shaft (4) in rotation when the vibrating stator (1) is no longer electrically powered.

2. Piezoelectric motor according to Claim 1, comprising two piezoelectric actuators (11), of which one operates by bending and the other by compression.

3. Piezoelectric motor according to Claim 1 or 2, **characterized in that** the piezoelectric actuator or actuators (11) are of "stack" type.

4. Piezoelectric motor according to any one of the preceding claims, comprising a mechanical amplification arrangement (12) positioned so as to augment the angular displacements of the support (7) .

5. Piezoelectric motor according to any one of the preceding claims, wherein at least one piezoelectric actuator (11) is provided with at least one displacement sensor.

6. Piezoelectric motor according to Claim 4, wherein at least one mechanical piezoelectric amplification arrangement (12) is provided with at least one displacement sensor.

7. Piezoelectric motor according to Claim 5 or 6, wherein at least one displacement sensor is used as resisting torque sensor (8) in the operation of the motor.

8. Piezoelectric motor according to any one of the preceding claims, **characterized in that** the shaft (4) is hollow.

9. Piezoelectric motor according to any one of the preceding claims, **characterized in that** it comprises a two-level electronic power supply and control board: a first level dedicated to the motor and a second level dedicated to the piezoelectric actuators (11).
